# EUROPEAN PATENT APPLICATION

(11) **EP 2 796 198 A1**
(43) Date of publication of application: **29.10.2014**
(21) Application number: 13164836.2
(22) Date of filing: 23.04.2013
(51) Int. Cl.: B01J 37/18, B01J 23/745, B01J 35/00, B01J 37/02, B01J 23/26, B01J 23/36, B01J 23/75, B01J 21/06, C01B 3/04, C01B 21/26

(54) **Catalysts for selective oxidation of ammonia in a gas containing hydrogen**

(71) Applicant: Danmarks Tekniske Universitet, 2800 Lyngby (DK)
(72) Inventor: Chakraborty, Debasish, 2300 Copenhagen S (DK); Olesen, Sine Ellemann, 2820 Gentofte (DK); Chorkendorff, Ib, 3460 Birkerød (DK)
(74) Representative: Plougmann & Vingtoft A/S

(57) **Abstract**

The invention contributes to a cost effective way to solve the problem of trace ammonia removal from hydrogen containing gas. The set of catalysts of the invention selectively oxidised ammonia in ppm concentration even in gas mixture containing hydrogen gas in concentration of three orders of magnitude higher than the concentration of ammonia.

## Description

### FIELD OF THE INVENTION

The present invention relates to catalysts that selectively remove ammonia in gas mixture containing hydrogen gas.

### BACKGROUND OF THE INVENTION

Hydrogen gas is a crucial source of energy, chemically stored in the hydrogen bond, as by far it is the best fuel for proton exchange membrane fuel cell (PEMFC). However, hydrogen gas is difficult to store especially under transportation due to its low energy density per volume and thus hydrogen storage is one of the main challenges in the introduction of fuel cell based power generation.

Ammonia is a carbon free high density hydrogen carrier that does not emit any carbon when decomposed. Only nitrogen, hydrogen and water gases are generated by the decomposition of ammonia.

Ammonia cannot be fed directly to the state of the art low temperature fuel cells because ammonia oxidation is extremely slow and inefficient. However, ammonia can be decomposed in high temperature reactor to generate hydrogen gas. Unfortunately, the hydrogen gas mixture produced by decomposition of ammonia unavoidably present a concentration of ammonia between few thousand to few hundred part per million (ppm) of ammonia, due to the nature of the decomposition reaction, i.e. an endothermic equilibrium controlled reaction.

Low temperature fuel cells, e.g. PEMFC, are very susceptible to the ammonia presence in their feed as even the presence of few ppm of ammonia deteriorates the performance of the fuel cell.

Thus, trace of ammonia must be removed from hydrogen gas mixtures in order to use the gas mixtures as a feed for low temperature fuel cell.

A current method for separating trace of ammonia from fuel cell feed is the one that involves the use of noble metal membrane. The fuel cell feed is flown through a thin palladium based membrane that separates the ammonia from the hydrogen gas. However, this membrane has the drawback that palladium is very expensive and the membrane produced lack of stability. Furthermore, in order to generate a reasonable flow of hydrogen gas, the gas pressure at the inlet side of the membrane has to reach high values, e.g. higher than 8 bar. These values require that the apparatus involved have to withstand high pressure, significantly increasing the costs. In some cases, e.g. when ammonia is released from metal ammine type solid ammonia storage, these high values are not reachable making the use of palladium membrane impossible.

Hence, an improved method for separating ammonia from hydrogen gas in hydrogen containing gas mixture would be advantageous, and in particular a more efficient and/or reliable system for removing ammonia from hydrogen gas in hydrogen containing gas mixture would be advantageous.

### OBJECT OF THE INVENTION

It is an object of the invention to provide a method for separating ammonia from hydrogen gas in hydrogen containing gas mixture.

It is an object of the invention to provide a system for removing ammonia from hydrogen gas in hydrogen containing gas mixture.

### SUMMARY OF THE INVENTION

The above described object and several other objects are intended to be obtained by providing a catalyst having a high selectivity towards ammonia oxidation even when the ammonia is present in very low concentration, e.g. few hundred ppm, and within gas mixture containing high concentration of hydrogen gas, e.g. nearly 75% (vol%).

The catalyst of the invention selectively oxidises ammonia in ppm concentration even in gas mixture containing hydrogen gas in concentration of three orders of magnitude higher than the concentration of ammonia.

By flowing a gas mixture containing hydrogen gas and trace of ammonia over the catalyst, the trace of ammonia are reduced or completely removed and the gas mixture can be used as a feed for low temperature fuel cells.

In a first aspect, the invention provides a method for activating a catalyst comprising at least one transition metal element supported on a support, the method comprising: treating the catalyst with a gas comprising nitrogen or gas mixture comprising nitrogen.

The activation of the catalyst induces the unique selectivity of the catalyst towards the oxidation of ammonia even in presence of high concentration of hydrogen gas. In some embodiments the treating comprises treating the catalyst with gas comprising ammonia or gas mixtures comprising ammonia.

The treating may comprise heating the catalyst at a temperature higher than or equal to 500 °C. For example, the treating of the catalyst may be at a temperature between 500 and 800 °C, such as between 550 and 750 °C, e.g. about 700 °C.

In one embodiment, the heat is applied to the catalyst at atmospheric pressure. However the heat may be applied also at different pressures.

In some embodiments the heating of the catalyst at a temperature higher than 500 °C is applied for a period longer than 8 hours. For example, the heating of the catalyst may be for a period between 8 and 24 hours (hrs), such as between 10 and 22 hrs, e.g. between 12 and 20 hrs.

In some embodiments the treating comprises ammonia gas combustion over the catalyst.

The inventors observed that the ammonia combustion over the catalyst produces changes in the catalyst structure and composition which are considered responsible for the improvement of the catalyst selectivity towards ammonia oxidation.

The above described object and several other objects are intended to be obtained in a second aspect of the invention by providing a method for manufacturing a catalyst, the method comprising:
- impregnating a support with transition metal elements by contacting the support with a solution comprising the metal elements, thereby producing an impregnated support;
- drying the impregnated support by heating or keeping at a desired temperature and for a specific period of time the impregnated support;
- reducing the impregnated support in reducing atmosphere at high temperature and for a specific period of time, thereby manufacturing a catalyst.

In some embodiments according to the second aspect of the invention, the catalyst is activated by treating the catalyst according to the first aspect of the invention, e.g. with a gas comprising nitrogen or gas mixtures comprising nitrogen or by performing ammonia gas combustion, for example by ammonia oxidation over the catalyst.

The catalyst may be prepared by impregnation, such as incipient wetness impregnation or capillary impregnation. The active metal precursor is dissolved in an aqueous or organic solution. The metal-containing solution obtained by dissolving the active metal precursor is added to a catalyst support.

In pore volume impregnation, the catalyst support contains the same pore volume as the volume of the solution that is put in contact with the catalyst. In this way capillary action draws the solution into the pores. If the solution is added in excess of the support pore volume, this causes the solution transport to change from a capillary action process to a diffusion process. This is not desirable as the diffusion process is much slower.

The catalyst is then dried at room or higher temperature for a specific period of time, e.g. for 24 hours, thus the volatile components within the solution can evaporate, depositing the metal on the catalyst support surface. The maximum loading is generally limited by the solubility of the precursor in the solution. The concentration profile of the impregnated compound depends on the mass transfer conditions within the pores during impregnation and drying.

The catalyst is then reduced in reducing atmosphere, such as in hydrogen gas at high temperature, such as between 300 and 700 °C, for a specific period of time, e.g. for 3 hours.

The catalyst is then treated with gas comprising nitrogen or gas mixture comprising nitrogen.

In some embodiments the catalyst is then treated by performing ammonia gas combustion, such as ammonia gas oxidation over the catalyst so as to activate its selectivity towards ammonia oxidation.

In some embodiments the ammonia gas combustion is performed at a temperature higher than or equal to 500 °C. For example, the combustion, i.e. the ammonia oxidation over the catalyst may be at a temperature between 500 and 800 °C, such as between 550 and 750 °C, e.g. about 700 °C.

In one embodiment, the heat is applied to the catalyst at atmospheric pressure. However the heat may be applied also at different pressures.

The ammonia gas combustion may be performed at a temperature higher than or equal to 500 °C for a period longer than 8 hrs. For example, the combustion may be for a period between 8 and 24 hrs, such as between 10 and 22 hrs, e.g. between 12 and 20 hrs.

In a third aspect of the invention a catalyst for selectively removing ammonia from hydrogen containing gas mixtures is provided; the catalyst comprising at least one transition metal element supported on a support, wherein the catalyst is obtainable by activation according to the method defined in the first or second aspect of the invention.

Transition metal elements are the elements of the d-block of the periodic table, i.e. including groups IIIB to IIB on the periodic table.

In particular the transition metal elements referred herein may be selected between the transition metal elements known to the person skilled in the art used to produce catalyst for gas phase reactions.

Thus, known catalyst for gas phase reaction activated according to the method defined in the first or second aspect of the invention may show selectivity in oxidation of ammonia in hydrogen gas containing mixture as the activating process may differentiate the catalyst structure so as to provide selectivity towards the ammonia oxidation.

In some embodiments according to the third aspect of the invention the at least one transition metal element is Fe, Cr, Co or Re, or a combination thereof.

The support may be a metal oxide. For example the support may be titanium dioxide or zirconium oxide. The metal oxide of the support may also be a metal comprised in the group IVB or VB.

The support may have the function of carrier for the transition metal elements. The crystal structure and composition of the carrier may influence the performance of the catalyst, i.e. its selectivity towards the oxidation of ammonia gas in gas mixture containing hydrogen.

The catalyst for selectively removing ammonia, e.g. by ammonia oxidation, from hydrogen containing gas mixtures, according to the third aspect of the invention, is treated according to the method of the first or second aspect of the invention. In a fourth aspect, the invention relates to the use of a catalyst in selectively removing ammonia from a gas mixture comprising hydrogen and ammonia gases.

In particular in some embodiments according to the fourth aspect of the invention, the invention relates to the use of a catalyst in selectively removing ammonia from a gas mixture having a composition of at least 75% (vol%) of hydrogen gas and containing ammonia in ppm concentration.

Gas mixture percentage (%) is herein defined as vol%.

In some embodiments the gas mixture may have a composition of at least 25% of hydrogen gas, such as between 25 and 50% of hydrogen gas. The concentration of ammonia in ppm concentration may be lower than 1000 ppm, such as lower than 500 ppm, e.g. between a 10 and 500 ppm.

In a fifth aspect of the invention, the invention relates to an apparatus for producing gas mixtures containing hydrogen, the apparatus comprising: a catalyst for decomposing ammonia; and, a catalyst for oxidizing ammonia.

The catalyst for oxidizing ammonia is a catalyst according to the third aspect of the invention.

The catalyst for decomposing ammonia may be a catalyst known to the person skilled in the art and used for decomposition of ammonia, e.g. in its gas phase. For example, catalysts known to the person skilled in the art and used for decomposition of ammonia comprises transition metals, such as Mo, W, V, Cr, Mn, Fe, Co and Ni and a metal oxide, such as ceria, zirconia, yttria, alumina, lanthanum oxide, magnesia, tungsten oxide and titania.

Thus, in some embodiments according to the fifth aspect of the invention, the invention relates to an ammonia cracking unit comprising the catalyst according to the third aspect of the invention.

A cracking unit comprising the catalyst of the invention has the main advantage over existing commercial solution as it is less complex and less expensive and furthermore does not employ noble metals membrane for ammonia separation. The use of the catalyst of the invention in a cracking unit favours the complete integration of the two processes, i.e. the ammonia decomposition and ammonia removal from the produced gas mixture stream, as, e.g. heat for the exhaust of the ammonia decomposition may be used to heat the part of the unit where ammonia oxidation occurs. Thus, it provides a cost effective, energy efficient, simple, reliable and convenient alternative to noble metal membrane that are currently used for ammonia removal.

In a further aspect, the invention relates to a method for selectively removing ammonia from gas mixtures, the method comprising: providing a flow of a gas mixture comprising hydrogen and ammonia gases over a catalyst according to third aspect of the invention, thereby selectively removing the ammonia from the gas mixture.

Trace of ammonia in hydrogen containing gas mixture may poison fuel cells and thus the use of ammonia free gas feed for fuel cell is crucial for ensuring optimal fuel cell performance. In some embodiments the method according to the further aspect of the invention selectively removes ammonia from gas mixtures having a composition of at least 75% (vol%) of hydrogen gas and contains ammonia in ppm concentration.

The first, second and third and other aspects and embodiments of the present invention may each be combined with any of the other aspects and embodiments. These and other aspects of the invention will be apparent from and elucidated with reference to the embodiments described hereinafter.

### BRIEF DESCRIPTION OF THE FIGURES

The methods and catalyst according to the invention will now be described in more detail with regard to the accompanying figures. The figures show one way of implementing the present invention and is not to be construed as being limiting to other possible embodiments falling within the scope of the attached claim set.
Figure 1 is a flow-chart of a method according to the invention.
Figure 2 is a graphic representation of the catalyst of the invention.
Figure 3 is a graphic representation of an ammonia cracker unit comprising a catalyst for decomposing ammonia and a catalyst for oxidizing ammonia.
Figure 4 X-ray diffraction (XRD) patterns of reduced, pretreated and used catalyst.
Figure 5 is a plot showing the selective oxidation of ammonia performed by the catalyst over gas mixture comprising traces of ammonia and oxygen gas in argon in presence of 10 % hydrogen gas.
Figure 6 is a plot showing the selective oxidation of ammonia performed by the catalyst over a hydrogen gas mixture containing 75% hydrogen gas comprising traces of ammonia and oxygen gas in argon.

### DETAILED DESCRIPTION OF AN EMBODIMENT

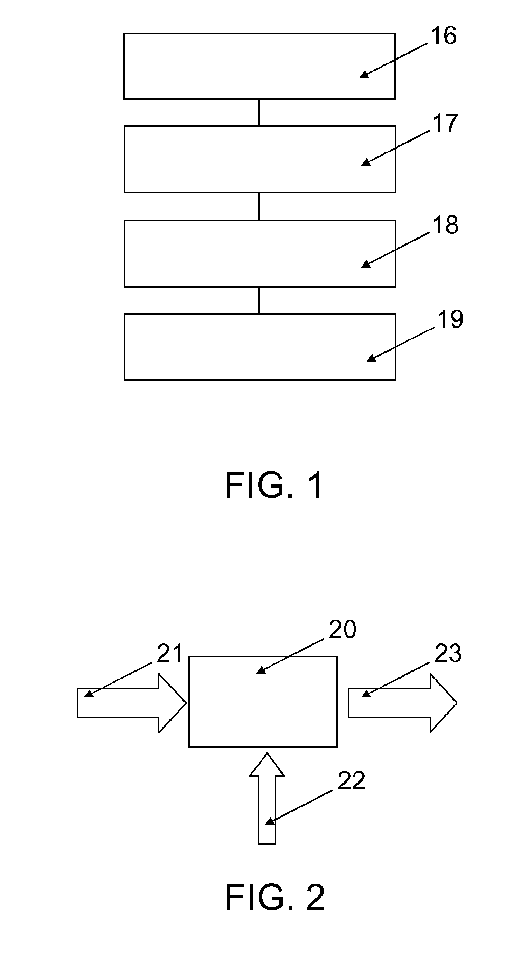

Figure 1 is a flow-chart of a method for manufacturing a catalyst, according to some aspects of the invention.

The method for manufacturing a catalyst may comprise: impregnating 16 a support with transition metal elements by contacting the support with a solution comprising the metal elements, thereby producing an impregnated support; drying 17 the impregnated support by heating or keeping at a desired temperature for a specific period of time the impregnated support; reducing 18 the impregnated support in reducing atmosphere at high temperature and for a specific period of time, thereby manufacturing a catalyst; activating 19 the catalyst by treating the catalyst with a gas comprising nitrogen or gas mixtures comprising nitrogen.

Figure 2 is a graphic representation of the catalyst of the invention.

A gas mixture 21 of hydrogen and ammonia is flowed through a reactor catalyst bed 20 in presence of oxygen gas 22. The selective ammonia oxidation of the catalyst produces a gas mixture 23 at the outlet of the reactor, which contains hydrogen, water and nitrogen gases. The trace of ammonia present in the gas mixture 21 that flows at the inlet of the reactor has been reduced, at least of an order of magnitude, if not completely removed, in the gas mixture 23 at the outlet of the reactor.

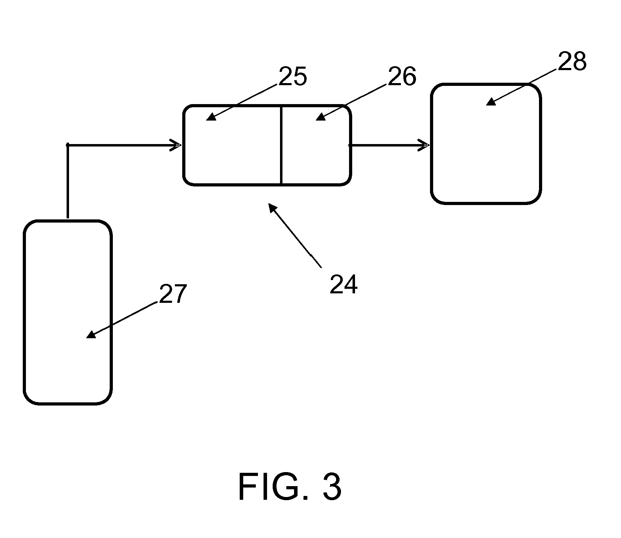

Figure 3 is a graphic representation of an ammonia cracker unit 24 comprising a catalyst for decomposing ammonia 25 and a catalyst for oxidizing ammonia 26. The catalyst 26 of the invention combined with a cracking catalyst 25 may provide great advantages when used in an apparatus for providing an hydrogen gas mixture having a high level of purity, i.e. where ammonia even in trace has been removed. Furthermore, the presence of catalyst for oxidizing ammonia 26 has the advantage of producing a humidified fuel cell feed at the outlet of the cracking unit. In some cases, hydrogen containing gas mixtures need to be humidified before being fed to low temperature fuel cells. By using the ammonia cracker unit according to one aspect of the invention, the humidification process is integrated in the cracking unit as the gas passing through the catalyst for oxidizing ammonia 26 is decomposed in nitrogen and water gas, thus humidifying the hydrogen gas containing mixture.

Ammonia is an excellent zero-carbon hydrogen gas carrier. Ammonia can be decomposed in a reactor, e.g. a cracker, at high temperature, providing a flow of hydrogen, nitrogen and ammonia gas. However the hydrogen containing gas mixture cannot be used directly as a fuel for electricity production in, e.g. a low temperature fuel cell. Even low concentration of ammonia in the hydrogen gas containing mixture can cause poisoning of the fuel cell. Thus trace of ammonia needs to be removed.

The use of the catalyst of the invention allows the manufacturing of a cracking unit where both ammonia decomposition and ammonia removal are accomplished within one apparatus.

By feeding ammonia 27 to the cracker unit 24 a feed for a fuel cell 28 may be produced.

### Preparation of the catalyst

The catalyst was prepared by pore volume impregnation of a titanium dioxide (TiO₂) support. For example, in order to synthesize Fe/TiO₂, an appropriate amount of iron nitrate nonahydrate (Fe(NO₃)₃·9H₂O) depending on the metal(s) loading of the catalyst was dissolved in purified demineralised water.

The solution was impregnated into the TiO₂ support and the catalyst was then dried at room temperature for at least 24 hours.

The catalyst was then loaded on a reactor bed and reduced in 80 ml/min flow of hydrogen gas at 500 °C for three hours.

In order to be activated the catalyst was treated by performing ammonia oxidation with the stoichiometric ratio between e.g. 1% O₂ in Ar and 2000 ppm NH₃ in Ar for at least 8 hours.

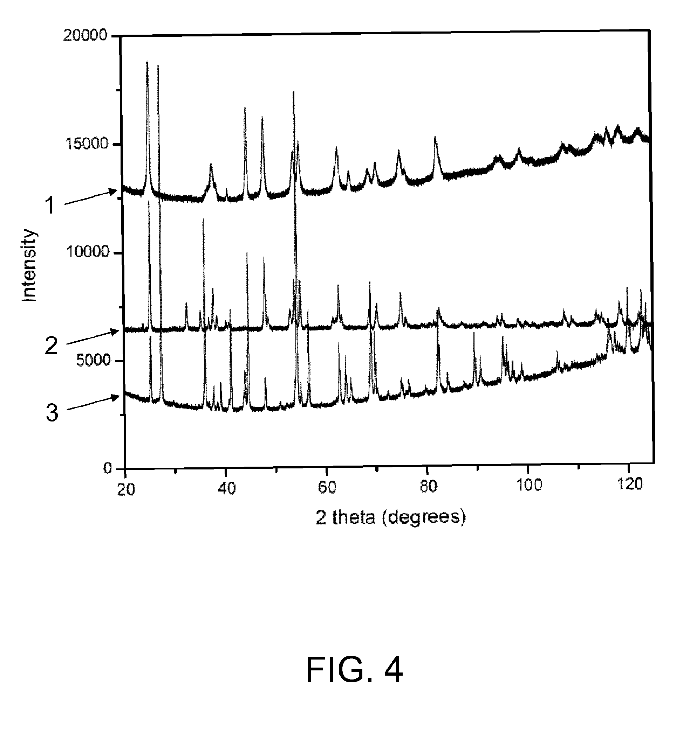

Figure 4 shows XRD patterns of the catalyst supported on titanium dioxide. On the Y axis XRD intensity is shown as a function of the diffraction angle 2 theta.

The XRD patterns have been recorded on a catalyst after reduction step (1), where the catalyst has been loaded on reactor bed and reduced in 80 ml/min flow of hydrogen gas at 500 °C for three hours.

Figure 4 also shows the XRD pattern of the same catalyst after the ammonia oxidation treatment as described above (2) and after being exposed to a gas mixture containing Ar and 3500 ppm of NH₃, 3500 ppm of O₂ and 10% H₂ (3) for over 8 hours.

It can be noticed, by comparing the XRD pattern following the reduction step with the one after the treatment step that the pretreatment step changes the structure of the catalyst and the support as different peaks can be identified.

Assignment of these peaks to specific structures is the object of current investigation.

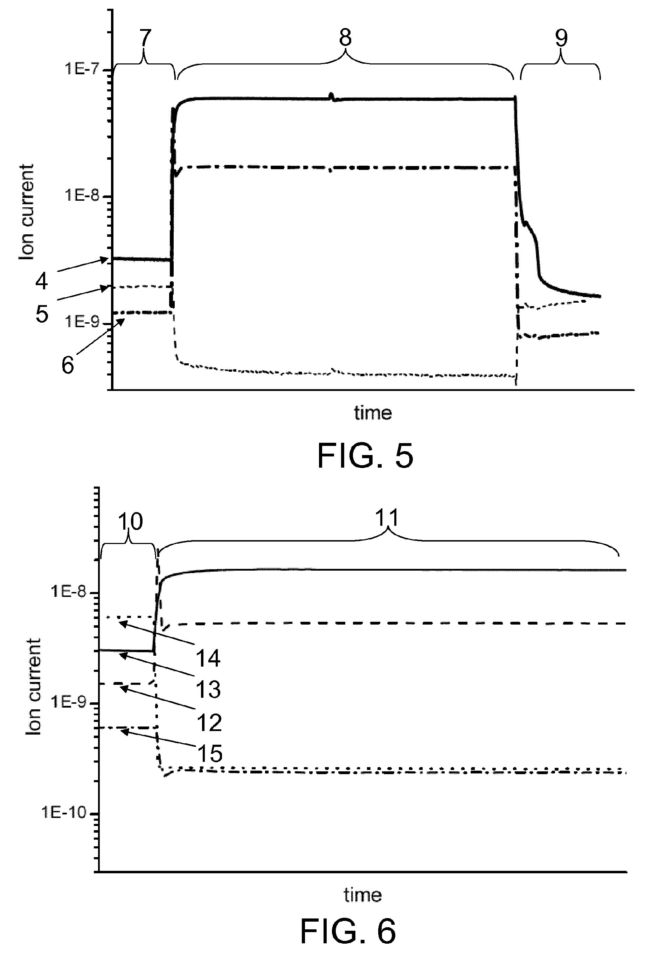

Figure 5 is a plot of the ion current as a function of time, showing the outcome of a stream of a gas mixture having 10% hydrogen gas and traces of ammonia and oxygen gas over the catalyst supported on titanium dioxide.

The gas mixture of figure 5 contains 3500 ppm of NH₃, 3500 ppm of O₂, 10% H₂ and Ar.

The test was performed by first allowing the gas mixture flow to bypass the reactor to get the starting concentration of the different gases (7). Then the gas mixture is flown through the reactor catalyst bed (8). It can be clearly seen that the ammonia signal (5) is reduced while the nitrogen (6) and water signal (4) are increased. This clearly shows the selectivity of the catalyst. The gas mixture is then allowed to bypass the reactor once again (9) showing that the gas mixture level returns to values similar to the one of the initial concentrations.

By switching between flow through the reactor and bypass it can be seen that the test has a high degree of reproducibility.

Figure 6 is a plot of the ion current as a function of time, showing the outcome of a stream of a gas mixture having 75% hydrogen gas and traces of ammonia and oxygen gas over the catalyst supported on titanium dioxide.

The gas mixture of figure 6 contains 450 ppm of NH₃, 340 ppm of O₂, 75% H₂ and Ar.

The test was performed by first allowing the gas mixture flow to bypass the reactor to get the starting concentration of the different gases (10). Then the gas mixture is flown through the reactor catalyst bed (11). It can be clearly seen that the ammonia signal (15) and the oxygen signal (14) are reduced while the nitrogen (12) and water signal (13) are increased. This clearly shows the selectivity of the catalyst for ammonia oxidation also in presence of high concentration of hydrogen. By switching between flow through the reactor and bypass it can be seen that the test has a high degree of reproducibility.

In both examples shown in figures 5 and 6 the catalyst was tested before the activation step in the same flow, temperature and pressure conditions showing no selectivity for ammonia oxidation.

Although the present invention has been described in connection with the specified embodiments, it should not be construed as being in any way limited to the presented examples. The scope of the present invention is set out by the accompanying claim set. In the context of the claims, the terms "comprising" or "comprises" do not exclude other possible elements or steps. Also, the mentioning of references such as "a" or "an" etc. should not be construed as excluding a plurality. The use of reference signs in the claims with respect to elements indicated in the figures shall also not be construed as limiting the scope of the invention. Furthermore, individual features mentioned in different claims, may possibly be advantageously combined, and the mentioning of these features in different claims does not exclude that a combination of features is not possible and advantageous.

## Claims

1. A method for activating a catalyst comprising at least one transition metal element supported on a support, said method comprising:
- treating said catalyst with a gas comprising nitrogen or gas mixture comprising nitrogen.

2. A method according to claim 1, wherein said treating comprises treating said catalyst with gas comprising ammonia or gas mixtures comprising ammonia.

3. A method according to any of claims 1-2, wherein said treating comprises heating said catalyst at a temperature higher than or equal to 500 °C.

4. A method according to claim 3, wherein said heating of said catalyst at a temperature higher than 500 °C is applied for a period longer than 8 hours.

5. A method according to any of claims 1-4, wherein said treating comprises ammonia gas combustion over the catalyst.

6. A method according to claim 5, wherein said combustion is performed at a temperature higher than or equal to 500 °C.

7. A method according to claim 6, wherein said combustion is performed at a temperature higher than or equal to 500 °C for a period longer than 8 hrs.

8. A catalyst comprising at least one transition metal element supported on a support for selectively removing ammonia from hydrogen containing gas mixtures, wherein said catalyst is obtainable by activation according to the method defined in any one of the claims 1-7.

9. A catalyst according to claim 8, wherein said at least one transition metal element is Fe, Cr, Co or Re, or a combination thereof.

10. A catalyst according to any one of the claims 8-9 wherein said support is a metal oxide, such as zirconium dioxide or titanium dioxide.

11. Use of a catalyst, according to any one of the claims 8-10, in selectively removing ammonia from a gas mixture comprising hydrogen and ammonia gases.

12. Use of a catalyst, according to any one of the claims 8-10, in selectively removing ammonia from a gas mixture having a composition of at least 75% (vol%) of hydrogen gas and containing ammonia in ppm concentration.

13. An apparatus for producing a gas mixture containing hydrogen, said apparatus comprising:
- a catalyst for decomposing ammonia;
- a catalyst for oxidizing ammonia, wherein said catalyst for oxidizing ammonia is a catalyst according to claims 8-10.

14. An ammonia cracking unit comprising the catalyst according to any of the claims 8-10.

15. A method for selectively removing ammonia from gas mixtures, the method comprising:
- providing a flow of a gas mixture comprising hydrogen and ammonia gases over a catalyst according to any of the claims 8- 10, thereby selectively removing said ammonia from said gas mixture.
